# EUROPEAN PATENT SPECIFICATION

(11) **EP 4 403 454 B1**
(45) Date of publication and mention of the grant of the patent: **29.10.2025**
(21) Application number: 22792886.8
(22) Date of filing: 15.09.2022
(51) Int. Cl.: B63B 35/00, B23Q 1/25, B29C 64/00, B63B 35/44

(54) **VESSEL HULL TO FACILITATE ONBOARD ADDITIVE MANUFACTURING OF COMPONENTS**
SCHIFFSRUMPF ZUR ERLEICHTERUNG DER GENERATIVEN BORDFERTIGUNG VON KOMPONENTEN
COQUE DE NAVIRE POUR FACILITER LA FABRICATION ADDITIVE DE COMPOSANTS EMBARQUÉS

(30) Priority: 15.09.2021 ES 202130858
(43) Date of publication of application: 24.07.2024
(73) Proprietor: Advantaria SL, 28806 Alcalá de Henares (Madrid) (ES)
(72) Inventor: REQUENA RODRÍGUEZ, Ignacio, 28806 Alcalá de Henares Madrid (ES)
(86) International application number: PCT/IB2022/058738
(87) International publication number: WO 2023/042129

(56) References cited:
- WO-A1-2018/222553
- CN-A- 111 055 282
- PHILLIPS BRENNAN T. ET AL: "Additive manufacturing aboard a moving vessel at sea using passively stabilized stereolithography (SLA) 3D printing", ADDITIVE MANUFACTURING, vol. 31, 25 November 2019 (2019-11-25), NL, pages 1 - 6, XP055979697, ISSN: 2214-8604, DOI: 10.1016/j.addma.2019.100969
- BANKS NATHAN ; ET AL: "Navy Additive Manufacturing Afloat Capabilily Analysis", THESES AND DISSERTATIONS, 1 June 2020 (2020-06-01), pages 1 - 122, XP055979701

## Description

### Technical Field

The invention falls within the field of vessel design and construction.

### State of the art

So-called Industry 4.0 allows parts and components of different materials to be created using additive manufacturing techniques, starting from digital files. This type of manufacturing can bring significant benefits on board vessels by ensuring the immediate availability of spare parts to replace or supplement damaged or broken parts, and to produce specific tools for each mission (rescue, supplies, etc.). The development of said manufacturing has led to several navies and military institutions carrying out a range of experimental tests. The main challenge faced by this type of additive manufacturing technology relates to the slowness of the processes, which may lead to displacement and rotational movements of the vessel relative to the X-, Y- and Z-axes in open sea, reducing the accuracy of the manufactured parts below the required level. Today's vessels lack an internal structure that would allow them to have additive manufacturing rooms and be able to transport large parts from these rooms to points inside or outside the vessel. The design that forms the object of the invention seeks to provide a solution to these two challenges. A vessel hull according to the state of the art is for example disclosed in document "PHILLIPS BRENNAN T. ET AL: "Additive manufacturing aboard a moving vessel at sea using passively stabilized stereolithography (SLA) 3D printing", ADDITIVE MANUFACTURING, vol.31, 25. November 2019 (2019-11-25), pages 1-6, XP055979697, NL, ISSN: 2214-8604, DOI: 10.1016/j.addma.2019.100969.

### Description of the invention

The vessel hull that forms the object of the invention has a specific room for additive manufacturing of spare parts or any other components that may be required. Said room is located in the area where the vessel's centre of gravity is found.

It must be remembered that the centre of gravity (which, in the case of a ship, coincides with its centre of mass) may undergo slight displacements in the three spatial directions along the X-, Y- and Z-axes, depending on the distribution of the on-board load.

It is for this reason that said room has a stabilising platform which the manufacturing equipment is placed on. Said platform can move along these three axes, such that the additive manufacturing head is located at or near the vessel's centre of mass at any given moment. The platform can partially damp the movement of the vessel relative to its six degrees of freedom (rotation and displacement relative to the X-, Y-, and Z-axes), for which it has a pendular system and dampers arranged according to said three directions (or other three alternative directions that are not contained in a single plane).

This combination of the location of the manufacturing room in the part of the vessel that is less exposed to movements, together with elements that allow dynamic damping of said movements, ensures better quality of the manufactured parts.

Similar to the structure of any large vessel, the hull also incorporates safety bulkheads, which include watertight transit hatches, to separate rooms on board the vessel. The vessel's design also incorporates galleries to transport components or spare parts manufactured on board. Parts made by additive manufacturing can typically have two purposes: to manufacture, firstly, spare parts in order to replace or supplement parts of the vessel that may be damaged or worn (e.g. for sleeves for damaged shafts), and, secondly, components intended for other vessels or for specific mission accomplishment (such as a specific part for adaptation in a submarine rescue mission).

In the first case, the manufactured parts will be used in different parts of the vessel, both inside the hull and also in the superstructure and outer decks (from where they can also be transported to the outside of the hull).

In the second case, the manufactured parts will mainly be removed from the vessel and incorporated in another vessel or auxiliary vehicle.

In both cases, it must be remembered that the manufactured parts are likely to be large in size (they may have cross-sections of several square metres, or be several metres long). It is therefore necessary to have a structure that allows these parts to be transported, either to the engine room or to the outer decks of the vessel.

A vertical gallery adjacent to the additive manufacturing room is therefore incorporated, with a large freight elevator that can descend to the machine room deck, or ascend to the height of the outer decks.

Said vertical gallery has, in its upper section, either direct access to an outer deck or direct access to a diaphanous horizontal gallery inside the superstructure that communicates with the outer deck.

The vertical gallery communicates, in its lower section, with the machine room, which may have several movable watertight bulkheads that are sufficiently sized for the transit of the manufactured parts; said bulkheads can therefore be opened as necessary to allow passage of the manufactured parts, remaining closed in their normal position.

The manufacturing room is also connected to another room where the materials necessary for additive manufacturing are stored.

In order to achieve stabilisation during the additive manufacturing process when carried out in open sea, it is necessary to first stabilise the vessel in the place where it is anchored. Stabilisation is achieved thanks to a dynamic positioning system using bow and stern thrusters, similar to those used in other types of vessels, such as for prospecting.

An initial stabilisation of the vessel in a predetermined position is therefore produced using its own means of propulsion and positioning, while the movements of heaving, swaying, surging, rolling, pitching and yawing are damped by the action of the stabilising platform and thanks to the location of the additive manufacturing equipment in the area of the vessel's centre of gravity, where these movements are less discernible.

Notwithstanding, sea conditions may cause sudden movements that exceed the absorption capacity of the stabilising platforms (especially with regard to heaving) even despite the static location of the vessel. It is therefore convenient to have an electronic material flow control system that temporarily stops the additive manufacturing process whenever oscillations above the absorption range of the platforms are detected through the use of accelerometers.

### Description of the drawings

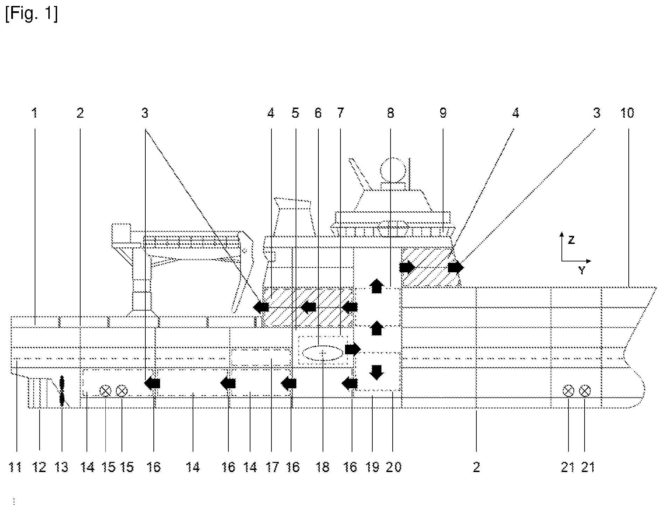

Figure 1 shows a drawing of an underwater intervention vessel in which the changes in the design have been highlighted in order to locate the additive manufacturing elements in the area where the centre of gravity is found, as well as for the interior and exterior distribution of the manufactured parts.

The elements appearing in the drawings are listed below:
1 - Aft deck.
2 - Fixed watertight bulkheads.
3 - Flow of manufactured parts.
4 - Diaphanous horizontal gallery for the transport of large parts.
5 - Additive manufacturing room.
6 - Area where the vessel's centre of gravity can be located according to the vessel's load distribution.
7 - Stabilising platform for additive manufacturing equipment.
8 - Side hatches in the vertical gallery of the main elevator.
9 - Navigation bridge.
10 - Flight deck.
11 - Waterline.
12 - Rudder.
13 - Propellers.
14 - Engine room.
15 - Stern thrusters.
16 - Movable watertight bulkheads.
17 - Storage area for materials for additive manufacturing.
18 - Additive manufacturing equipment head with electronic flow control system.
19 - Vertical gallery for the main elevator.
20 - Main elevator.
21 - Bow thrusters.

### Description of a preferred embodiment

The detailed preferred embodiment relates to the application of this design in an underwater intervention vessel with on-board manufacture of components adapted to changing mission characteristics as needs are identified in the underwater vehicles.

Figure 1 shows a drawing of a partial lateral view according to a vertical plane displaced relative to the plane containing the keel, maintaining the external view of some components of the vessel's upper body such as the navigation bridge (9) and other adjacent areas.

The vessel design incorporates an additive manufacturing room (5), inside which the vessel's centre of gravity (6) is found in different positions depending on the possible load distributions of the vessel. In this room, there is equipment for additive manufacturing of components with different materials. Said equipment is located on a stabilising platform (7) that partially damps movements according to the vessel's six degrees of freedom (rotations and displacements relative to the X-, Y-, and Z-axes).

The head (18) of the additive manufacturing equipment is located in the position where the centre of gravity is found, and the stabilising platform can be fixed in different positions according to said X-, Y- and Z-axes in order to offset the displacement of the centre of gravity as resulting from load distribution inside the vessel.

Forward of the additive manufacturing room, there is a vertical gallery (19) with a cross-section of several square metres, through which a large main elevator (20) passes. Said elevator can descend to the engine room deck (14) and can transport the manufactured components (3) to the engine room deck through movable watertight bulkheads (16).

The main elevator can ascend to two large diaphanous horizontal galleries (4) located aft and forward of the vertical gallery, which communicate respectively with the aft deck (1) and with the flight deck (10), located at the forward of the vessel.

There are two side hatches (8) in the sides of the vertical gallery, above the waterline (11), which can be opened to make it easier to transport large components from the main elevator to the outside of the vessel when moored or docked to another vessel.

There is another room (17), aft of the additive manufacturing room, for storing the materials for this manufacturing process.

Given the nature of the missions to be performed by underwater intervention vessels, dynamic positioning systems are often incorporated with lateral auxiliary thrusters at the forward (21) and at the aft (15) of the vessel.

As stated, the heads (18) of the additive manufacturing equipment have electronic systems that automatically stop the flow of material, bringing the manufacturing process to a halt whenever sudden oscillations of the vessel that exceed the damping capacity of the platforms are detected, and resuming the manufacturing process when the levels of movement and oscillation of the vessel so allow.

## Claims

1. Vessel hull, **characterised in that**:
a) it includes an additive manufacturing room (5), such that:
a1) it is located in such a way that the various possible positions (6) of the vessel's centre of mass as deriving from the load distribution are located inside the room;
a2) it has a stabilising platform (7), such that:
a2a) it can partially damp the vessel's movements according to the six degrees of freedom (displacement and rotation around the X-, Y- and Z-axes) by means of a pendular and damper system;
a2b) an additive manufacturing equipment head (18) is placed inside it;
b) it includes a vertical gallery (19), such that:
b1) it communicates with the additive manufacturing room, either directly or through intermediate rooms or movable bulkheads or hatches;
b2) it has a cross-section of several square metres in the horizontal plane;
b3) an elevator (20) with a base of several square metres runs inside it;
b4) the gallery runs along its upper section up to the height of an outer deck (1);
b5) the gallery runs along its lower section up to the height of the engine room (14).

2. Vessel hull according to claim 1, **characterised in that** it has fixed vertical watertight bulkheads (2) along the structure of the vessel, and movable vertical watertight bulkheads (16) in the vicinity of the engine room (14) and the vertical gallery (19).

3. Vessel hull according to claims 1 or 2, **characterised in that** the stabilising platform (7) can be displaced along the X-, Y-, Z-axes until it reaches a new resting reference position, in such a way that the additive manufacturing head (18) is located as close as possible to the vessel's centre of gravity and any displacements of the centre of gravity due to a new load distribution in the vessel are offset.

4. Vessel hull according to claims 1, 2 or 3, **characterised in that** the head (18) of the manufacturing equipment has an electronic material flow control system connected to an accelerometer, allowing manufacturing to be temporarily interrupted in the event of sudden movements of the vessel.

5. Vessel hull according to claims 1, 2, 3, or 4, **characterised in that** lateral hatches (8) located in the sides of the vertical gallery (19), above the waterline (11), allow communication between the vertical gallery and the outside of the vessel.

6. Vessel hull according to claims 1, 2, 3, 4 or 5, **characterised in that** it has diaphanous horizontal galleries (4) that communicate the vertical gallery (19) with the outer decks (1) (10).

7. Vessel hull according to claim 6, **characterised in that** the horizontal galleries (4) have a height of several metres and a passage width of several metres.

8. Vessel hull according to claims 1, 2, 3, 4, 5, 6 or 7, **characterised in that** it has a storage room (17) for manufacturing materials which communicates with the additive manufacturing room (5).

9. Vessel hull according to claims 1, 2, 3, 4, 5, 6, 7 or 8, **characterised in that** it has bow and stern thrusters that allow the stability of the vessel at sea to be increased.

## Patentansprüche

1. Schiffsrumpf, **dadurch gekennzeichnet, dass**:
a) er einen Additiv-Fertigungs-Raum (5) aufweist, sodass:
a1) er in einer solchen Weise angeordnet ist, dass die verschiedenen möglichen Positionen (6) des Schwerpunkts des Schiffs, wie sie sich aus der Lastverteilung ergeben, innerhalb des Raums angeordnet sind;
a2) er eine Stabilisierungsplattform (7) hat, sodass:
a2a) er die Bewegungen des Schiffsrumpfs gemäß den sechs Freiheitsgraden (Verschiebung entlang der und Drehung um die Achsen X, Y und Z) mittels eines Pendeldämpfersystems dämpfen kann;
a2b) ein Additiv-Fertigungs-Ausrüstungs-Kopf (18) darin angeordnet ist;
b) er eine senkrechte Galerie (19) aufweist, sodass:
b1) sie mit dem Additiv-Fertigungs-Raum entweder direkt oder über zwischengelagerte Räume oder bewegliche Schotte oder Luken kommuniziert;
b2) sie eine Querschnittsfläche von mehreren Quadratmetern in der waagrechten Ebene hat;
b3) ein Aufzug (20) mit einer Grundfläche von mehreren Quadratmetern darin verläuft;
b4) die Galerie sich entlang ihrem oberen Abschnitt bis zur Höhe eines Außendecks (1) erstreckt;
b5) die Galerie sich entlang ihrem unteren Abschnitt bis zur Höhe des Maschinenraums (14) erstreckt.

2. Schiffsrumpf gemäß Anspruch 1, **dadurch gekennzeichnet, dass** er feste senkrechte wasserdichte Schotte (2) entlang der Struktur des Schiffs hat und bewegliche senkrechte wasserdichte Schotte (16) in der Nachbarschaft des Maschinenraums (14) und der senkrechten Galerie (19) hat.

3. Schiffsrumpf gemäß Anspruch 1 oder 2, **dadurch gekennzeichnet, dass** die Stabilisierungsplattform (7) entlang der Achsen X, Y und Z verschoben werden kann, bis sie eine neue ruhende Referenzposition erreicht, in einer solchen Weise, dass der Additiv-Fertigungs-Kopf (18) dem Schwerpunkt des Schiffs so nahe wie möglich liegt und Verschiebungen des Schwerpunkts aufgrund einer neuen Lastverteilung in dem Schiff ausgeglichen werden.

4. Schiffsrumpf gemäß Anspruch 1, 2 oder 3, **dadurch gekennzeichnet, dass** der Kopf (18) der Fertigungsausrüstung ein elektronisches Materialfluss-Steuerungssystem hat, das mit einem Beschleunigungsmesser verbunden ist, wodurch es möglich wird, in dem Fall von plötzlichen Bewegungen des Schiffs die Fertigung zeitweise zu unterbrechen.

5. Schiffsrumpf gemäß Anspruch 1, 2, 3 oder 4, **dadurch gekennzeichnet, dass** die seitlichen Luken (8), die in den Seiten der senkrechten Galerie (19) oberhalb der Wasserlinie (11) angeordnet sind, eine Kommunikation zwischen der senkrechten Galerie und der Außenseite des Schiffs erlauben.

6. Schiffsrumpf gemäß Anspruch 1, 2, 3, 4 oder 5, **dadurch gekennzeichnet, dass** er durchscheinende waagrechte Galerien (4) hat, die zwischen der senkrechten Galerie (19) und den äußeren Decks (1) (10) eine Kommunikation herstellen.

7. Schiffsrumpf gemäß Anspruch 6, **dadurch gekennzeichnet, dass** die waagrechten Galerien (4) eine Höhe von mehreren Metern haben und eine Durchgangsbreite von mehreren Metern haben.

8. Schiffsrumpf gemäß Anspruch 1, 2, 3, 4, 5, 6 oder 7, **dadurch gekennzeichnet, dass** er einen Lagerraum (17) für Fertigungswerkstoffe hat, der mit dem Additiv-Fertigungs-Raum (5) kommuniziert.

9. Schiffsrumpf gemäß Anspruch 1, 2, 3, 4, 5, 6, 7 oder 8, **dadurch gekennzeichnet, dass** er Bug- und Heck-Strahlruder hat, die es ermöglichen, die Stabilität des Schiffs auf See zu erhöhen.

## Revendications

1. Coque de navire, **caractérisée en ce que** :
a) elle comprend une salle (5) de fabrication additive, telle que :
a1) elle est située de telle sorte que les différentes positions possibles (6) du centre de masse du navire découlant de la répartition de la charge sont situées à l'intérieur de la salle ;
a2) elle comporte une plate-forme stabilisatrice (7), telle que :
a2a) elle peut amortir partiellement les mouvements du navire selon les six degrés de liberté (déplacement et rotation autour des axes X, Y et Z) au moyen d'un système pendulaire et amortisseur ;
a2b) une tête (18) d'équipement de fabrication additive est placée à l'intérieur de celle-ci ;
b) elle comprend une galerie verticale (19), telle que :
b1) elle communique avec la salle de fabrication additive, soit directement, soit à travers des salles intermédiaires, des cloisons mobiles ou des écoutilles ;
b2) elle a une section transversale de plusieurs mètres carrés dans le plan horizontal ;
b3) un monte-charge (20) ayant une base de plusieurs mètres carrés circule à l'intérieur de celle-là ;
b4) la galerie fait passer sa section supérieure jusqu'à la hauteur d'un pont extérieur (1) ;
b5) la galerie fait passer sa section inférieure jusqu'à la hauteur de la salle des machines (14).

2. Coque de navire selon la revendication 1, **caractérisée en ce qu'**elle comporte des cloisons étanches (2) verticales fixes le long de la structure du navire, et des cloisons étanches (16) verticales mobiles à proximité de la salle des machines (14) et de la galerie verticale (19).

3. Coque de navire selon la revendication 1 ou 2, **caractérisée en ce qu'**on peut déplacer la plate-forme stabilisatrice (7) le long des axes X, Y, Z jusqu'à ce qu'elle atteigne une nouvelle position de référence de repos, de telle sorte que la tête (18) de fabrication additive soit située aussi près que possible du centre de gravité du navire et que tout déplacement du centre de gravité dû à une nouvelle répartition de la charge dans le navire soit compensé.

4. Coque de navire selon la revendication 1, 2 ou 3, **caractérisée en ce que** la tête (18) de l'équipement de fabrication comporte un système électronique de commande des flux de matériau raccordé à un accéléromètre, ce qui permet d'interrompre temporairement la fabrication en cas de mouvements brusques de la coque.

5. Coque de navire selon la revendication 1, 2, 3 ou 4, **caractérisée en ce que** des trappes latérales (8) situées sur les côtés de la galerie verticale (19), au-dessus de la ligne de flottaison (11), permettent de communiquer entre la galerie verticale et l'extérieur du navire.

6. Coque de navire selon la revendication 1, 2, 3, 4 ou 5, **caractérisée en ce qu'**elle comporte des galeries horizontales (4) translucides qui font communiquer la galerie verticale (19) avec les ponts extérieurs (1) et (10).

7. Coque de navire selon la revendication 6, **caractérisée en ce que** les galeries horizontales (4) ont une hauteur de plusieurs mètres et une largeur de passage de plusieurs mètres.

8. Coque de navire selon la revendication 1, 2, 3, 4, 5, 6 ou 7, **caractérisée en ce qu'**elle comporte une salle de stockage (17) pour les fournitures de fabrication qui communique avec la salle (5) de fabrication additive.

9. Coque de navire selon la revendication 1, 2, 3, 4, 5, 6, 7 ou 8, **caractérisée en ce qu'**elle comporte des propulseurs de proue et de poupe qui permettent d'augmenter la stabilité du navire en mer.
